# EUROPÄISCHE PATENTSCHRIFT

(11) **EP 2 084 415 B1**
(45) Veröffentlichungstag und Bekanntmachung des Hinweises auf die Patenterteilung: **13.04.2011**
(21) Anmeldenummer: 07822020.9
(22) Anmeldetag: 30.10.2007
(51) Int. Cl.: F16C 29/02, F04B 35/00, F04B 39/02

(54) **GASDRUCKLAGER UND LAGERBUCHSE DAFÜR**
GAS THRUST BEARING AND BEARING BUSH THEREFOR
PALIER A GAZ SOUS PRESSION ET COUSSINET

(30) Priorität: 07.11.2006 DE 102006052427
(43) Veröffentlichungstag der Anmeldung: 05.08.2009
(73) Patentinhaber: BSH Bosch und Siemens Hausgeräte GmbH, 81739 München (DE)
(72) Erfinder: SCHUBERT, Jan-Grigor, 89250 Senden (DE)
(86) Internationale Anmeldenummer: PCT/EP2007/061666
(87) Internationale Veröffentlichungsnummer: WO 2008/055810

(56) Entgegenhaltungen:
- DE-A1-102004 061 940
- DE-A1-102006 009 274
- FR-A- 1 526 639
- US-A- 5 645 354

## Beschreibung

Die vorliegende Erfindung betrifft ein Gasdrucklager nach dem Oberbegriff des Anspruches 1 sowie einen Linearverdichter in dem das Gasdrucklager Anwendung findet.

Das Dokument DE 10 2004 061 940 A1 zeigt eine Kolben-Zylinder-Einheit mit einem Zylinder und einem Kolben. Der Zylinder ist mit einer Zylinderbohrung versehen, in der der Kolben in Richtung der Längsachse der Zylinderbohrung hin- und her bewegbar und frei geführt aufgenommen ist. In einem Zylindergehäuse sind die Zylinderbohrung ringförmig umgebende Ringkanäle gebildet, wobei jeder Ringkanal mit einer Vielzahl von Mikrolöchem versehen ist, die den jeweiligen Ringkanal mit dem Inneren der Zylinderbohrung verbinden und dabei die Innenwand des Zylinders durchdringen.

Das Dokument US 5,645,354 beschreibt ein aerostatisches Lager mit einem Lagerkörper, in welchem umlaufende Nuten gebildet sind. Am Boden der Nuten sind Löcher gebildet.

Radial wirkende Gasdrucklager nehmen radiale Kräfte, die auf einen in einer Lagerbuchse beweglich gehaltenen Körper wie etwa eine Welle oder einen Kolben wirken, dadurch auf, dass sie durch kleine Bohrungen in der Wand der Lagerbuchse unter Druck stehendes Gas so gleichmäßig in einen Spalt zwischen Körper und Buchse leiten, dass das entstehende Gaspolster eine Berührung von Körper und Lagerbuchse verhindert.

Wird durch eine radial wirkende Kraft der Körper gegenüber der Lagerbuchse radial verschoben, so verengt sich der Spalt zwischen Körper und Lagerbuchse in Kraftrichtung, und das Gaspolster im verengten Bereich des Spalts wird verdichtet, während ein Bereich des Spalts auf der gegenüberliegenden Seite des Körpers weiter wird und das Gaspolster sich dort entsprechend entspannt. Durch diese Druckdifferenz entsteht eine Rückstellkraft, die um so größer wird, je stärker die radiale Auslenkung des Körpers und damit die Druckdifferenz zwischen den zwei Bereichen des Spalts ist (Federwirkung). Die Stärke der Federwirkung (Steifigkeit) eines Gasdrucklagers wird im Wesentlichen bestimmt durch den Querschnitt der Versorgungsbohrungen. Je kleiner dieser ist, um so wirkungsvoller wird ein Rückströmen des Gases verhindert. Je geringer der Rückströmeffekt, desto stärker ist die Druckerhöhung durch die radiale Verschiebung des Körpers, und desto höher ist daher die Rückstellkraft (Steifigkeit).

Je kleiner der Durchmesser der Versorgungsbohrungen ist, um so geringer ist der für eine befriedigende Lagerwirkung erforderliche Gasdurchsatz durch die Versorgungsbohrungen. Eine Minimierung des Gasdurchsatzes ist insbesondere für Anwendungen wie etwa die Lagerung eines Verdichterkolbens von hoher Bedeutung, bei der von dem Verdichter selbst verdichtetes Gas für den Betrieb des Gasdrucklagers genutzt wird und ein hoher Gasverbrauch den Wirkungsgrad des Verdichters beeinträchtigt.

Es ist also aus verschiedenen Gründen wünschenswert, den Durchmesser der Versorgungsbohrungen in einer Lagerbuchse eines Gasdrucklagers so klein wie möglich zu machen.

Bohrungsdurchmesser im Bereich weniger hundertstel Millimeter können heute effizient mit gepulsten Laserstrahlen oder mit Funkenerosion hergestellt werden. Dabei spielt aber das Aspektverhältnis der Bohrung (Durchmesser d zu Bohrungslänge L) eine besondere Rolle bezüglich Qualität und Wirtschaftlichkeit der Bohrung. Für die industrielle Herstellung liegt der Stand der Technik heute bei Aspektverhältnissen von maximal 1:20. Ein höheres Aspektverhältnis von bis zu 1:40 ist bei geeigneter Materialwahl unter Umständen erreichbar, jedoch nur auf Kosten der Wiederholgenauigkeit der Bohrungen.

Wenn man einen praktisch realisierbaren Durchmesser d der Versorgungsbohrungen von 30 µm und ein Aspektverhältnis von 1:20 annimmt, darf die Wandstärke L der Buchse 0,6 mm nicht überschreiten. Die mechanische Bearbeitung einer solchen dünnwandigen Buchse ist extrem schwierig, da die zum Aufspannen und Zerspanen notwendigen Kräfte die hochgenaue Buchse sehr leicht verformen können. Ein Lösungsansatz, der die Formbeständigkeit der Buchse verbessert und dennoch die Bildung von engen Versorgungsbohrungen ermöglicht, ist, in einer ursprünglich dickwandigen Buchse an einer Außenfläche umlaufende Nuten zu drehen, wodurch die Wandstärke der Buchse im Bereich der Nuten verringert wird, und anschließend die Versorgungsbohrungen am Boden der Nuten zu bilden. Auch hier ergibt sich jedoch das Problem, dass die im Bereich der Nuten sehr dünnwandige Buchse gefährdet ist, durch beim Zerspanen auftretende Kräfte verformt zu werden. Dies zwingt in der Praxis dazu, auch im Bereich der Nuten eine so hohe Restwandstärke beizubehalten, dass reproduzierbar mit einem Aspektverhältnis von ca. 1:20 fertigbare Versorgungsbohrungen einen unerwünscht großen Durchmesser haben oder Bohrungen mit einem höheren Aspektverhältnis und einer eingeschränkten Reproduzierbarkeit geschaffen werden müssen, die zu einer ungleichmäßigen Verteilung des Gaspolsters zwischen der Lagerbuchse und dem darin gelagerten Körper und damit zu einer eingeschränkt zuverlässigen Lagerwirkung führen. Aufgabe der vorliegenden Erfindung ist, eine Lagerbuchse, die reproduzierbare, enge Versorgungsbohrungen und eine hohe Formbeständigkeit aufweist, sowie Anwendungen für eine solche Lagerbuchse anzugeben.

Die Aufgabe wird gelöst durch ein Gasdrucklager mit einem eine Lagerbuchse aufweisenden Gehäuse, die einen Buchsenkörper besitzt, der eine Längsachse definiert und eine Mehrzahl von an einer Außenfläche des Buchsenkörpers gebildeten Vertiefungen und einer Mehrzahl von sich jeweils vom Boden einer dieser Vertiefungen aus durch den Buchsenkörper zu einer Innenfläche desselben erstreckenden Kapillarbohrungen aufweist, der dadurch gekennzeichnet ist, dass der Buchsenkörper in jedem Schnitt, der quer zu der Längsachse durch eine der Kapillarbohrungen verläuft, lokal eine höhere Wandstärke aufweist als in unmittelbarer Umgebung der Bohrung. Während bei der herkömmlichen Lagerbuchse die umlaufende Nut eine über den gesamten Querschnitt gleich bleibende, geringe Wandstärke hat, ermöglicht die erfindungsgemäß lokal erhöhte Wandstärke eine erhöhte Belastbarkeit der Lagerbuchse, insbesondere gegen Drehmomente mit zur Längsachse parallelem Drehmomentvektor.

Einer ersten Ausgestaltung zu der Erfindung zufolge sind die Vertiefungen jeweils Sackbohrungen, deren Durchmesser größer ist als der der Kapillarbohrungen, und die Kapillarbohrungen gehen jeweils von einer Bodenfläche jeder Sackbohrung aus.

Mit dieser Ausgestaltung ist eine sehr hohe Formbeständigkeit der Lagerbuchse realisierbar, da die Wandstärke des Buchsenkörpers außerhalb der Sackbohrungen nach Bedarf groß gewählt werden kann. Die Fertigung dieser Lagerbuchse ist jedoch vergleichsweise aufwändig, da jede sich durch den Buchsenkörper erstreckende Versorgungsbohrung in zwei Schritten, zunächst der Erzeugung der Sackbohrung und anschließend der Erzeugung der Kapillarbohrung, erzeugt werden muss und bei der Erzeugung der Sackbohrung die Bohrtiefe mit hoher Genauigkeit überwacht werden muss.

Einer einfacher zu fertigenden Ausgestaltung zufolge sind die Vertiefungen segmentförmige Aussparungen an der zylindrischen Außenfläche der Hülse. Diese sind mit gleich bleibender Eindringtiefe leicht zu fertigen, indem beispielsweise die Lagerbuchse auf einem Bearbeitungstisch platziert wird und über ein Kreissägeblatt oder einen Fräskopf gezogen wird, dessen Überstand über die Tischoberfläche geringfügig kleiner als die Wandstärke des Buchsenkörpers ist.

Eine Kapillarbohrung geht bei dieser Ausgestaltung vorzugsweise in einem Schnitt quer zu der Längsachse jeweils mittig von einer Bodenfläche der Aussparung aus, da dort die verbleibende Wandstärke am geringsten ist.

Zweckmäßig ist ferner, wenn jeweils mehrere der besagten Aussparungen zu einer an der Außenfläche umlaufenden Nut verschmolzen sind, da dann ein einziger mit der Nut kommunizierender Versorgungszugang genügt, um alle von der Nut ausgehenden Kapillarbohrungen mit Druckgas zu speisen.

Die Bodenflächen der Aussparungen bilden vorzugsweise im Schnitt ein regelmäßiges Vieleck.

Nicht nur im Fall der oben erwähnten segmentförmigen Aussparungen ist es zweckmäßig, wenn die Vertiefungen Teil wenigstens einer an der Außenfläche umlaufenden Nut mit in Umlaufrichtung variabler Tiefe sind, um eine gemeinsame Speisung aller von der Nut ausgehenden Kapillarbohrungen mit Druckgas zu ermöglichen.

Einer weiteren bevorzugten Ausgestaltung zufolge hat der Buchsenkörper in einem Schnitt quer zu der Längsachse die Form eines Zahnrades, wobei jeweils von einem Zahnzwischenraum der Zahnradform eine der Kapillarbohrungen ausgeht.

Die Zähne und Zahnzwischenräume bilden vorzugsweise im Schnitt eine geschwungene Kontur.

Die Zahnradform, insbesondere eine Zahnradform mit geschwungener Kontur, ist leicht durch Drehen mit einem oszillierenden Drehmeißel erzeugbar.

Bei einem Gasdrucklager mit einer Lagerbuchse der oben beschriebenen Art und einem die Lagerbuchse aufnehmenden Gehäuse ist vorzugsweise an einer

Innenfläche des Gehäuses wenigstens ein Kanal gebildet, über den mehrere der Vertiefungen kommunizieren, um eine gemeinsame Speisung der mehreren Vertiefungen mit Druckgas zu ermöglichen.

Der Kanal ist vorzugsweise in Richtung der Längsachse ausgedehnt, und die über den Kanal miteinander kommunizierenden Vertiefungen sind in Richtung der Längsachse beabstandet. Insbesondere können die kommunizierenden Vertiefungen zu verschiedenen umlaufenden Nuten gehören.

Gegenstand der Erfindung ist auch ein Linearverdichter, in dem eine Lagerbuchse, und/oder ein Gasdrucklager wie oben definiert verwendet ist.

Weiter Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen axialen Schnitt durch einen erfindungsgemäßen Linearverdichter;
- Fig. 2: einen radialen Schnitt durch den Linearverdichter entlang der in Fig. 1 mit II-II bezeichneten Ebene;
- Fig. 3: einen Schnitt durch die Lagerbuchse des Linearverdichters entlang der in Fig. 3 mit III-III bezeichneten Ebene gemäße einer ersten Ausgestaltung;
- Fig. 4: einen radialen Schnitt durch einen Linearverdichter gemäß einer zweiten Ausgestaltung;
- Fig. 5: eine perspektivische Teilansicht der Lagerbuchse gemäß der zweiten Ausgestaltung; und
- Fig. 6: einen zu Fig. 4 analogen Schnitt gemäß einer dritten Ausgestaltung der Erfindung.

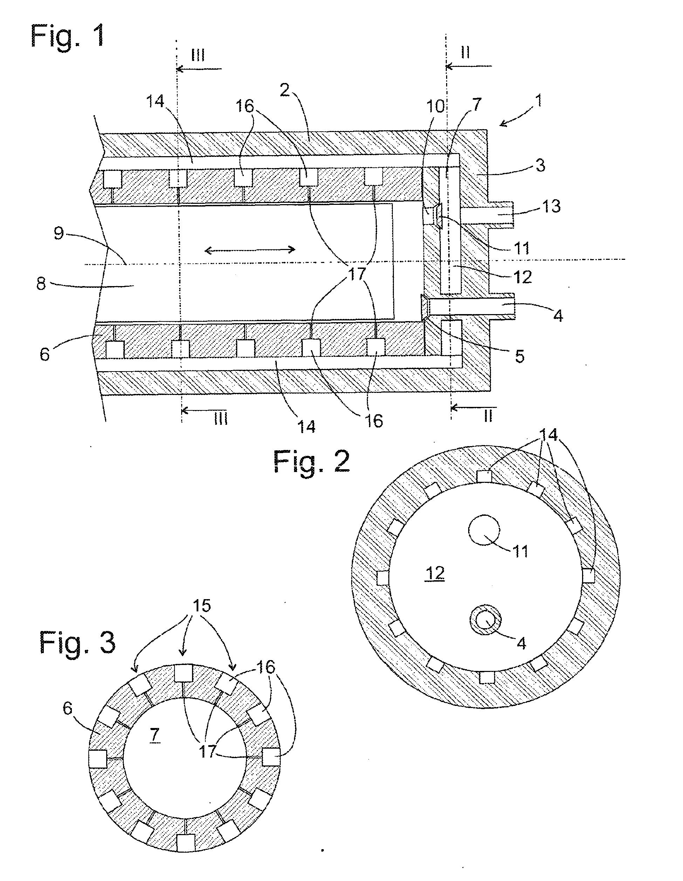

Der in Fig. 1 gezeigte Linearverdichter hat ein Gehäuse 1 mit einem zylindrischen Mantel 2, der an einem Ende durch eine Stirnwand 3 verschlossen ist. Ein Sauganschluss 4 mit einem Rückschlagventil 5 erstreckt sich durch die Stirnwand 3 in einen inneren Hohlraum des Gehäuses 1. In diesem Hohlraum ist an einer Innenfläche des Mantels 2 anliegend eine zylindrische Lagerbuchse 6 angeordnet, die zusammen mit der Stirnwand 3 eine Arbeitskammer 7 begrenzt. In dieser ist ein Kolben 8 in Richtung der Längsachse 9 der Lagerbuchse 6 verschiebbar. Eine von der Stirnwand 3 fort gerichtete Bewegung des Kolbens 8 saugt ein zu verdichtendes Gas durch den Sauganschluss 4 in die Arbeitskammer 7; eine Bewegung des Kolbens 8 auf die Stirnwand 3 zu verdichtet das Gas und drückt es schließlich in einen Druckauslass 10, in dem ein zweites Rückschlagventil 11 angeordnet ist.

Stromabwärts vom Rückschlagventil 11 ist eine Verteilerkammer 12 in der Stirnwand 3 gebildet. Der überwiegende Teil des verdichteten Gases verlässt die Verteilerkammer 12 über einen Druckanschluss 13; ein kleiner Teil strömt in Kanäle 14, die sich entlang der Innenfläche des Mantels 2 in axialer Richtung erstrecken und jeweils mit einer Mehrzahl von sich durch den Körper der Lagerbuchse 6 erstreckenden Versorgungsbohrungen 15 kommunizieren. Die Versorgungsbohrungen 15 sind jeweils gebildet durch eine äußere Sackbohrung 16, deren Tiefe exakt bemessen ist, um zwischen dem Boden jeder Sackbohrung 16 und einer Innenseite der Hülse eine Restwandstärke von z. B. 0,6 mm zu gewährleisten. Eine Kapillarbohrung 17 mit einem Durchmesser von z. B. 30 µm erstreckt sich vom Boden jeder Sackbohrung 16 durch den Körper der Lagerbuchse 6 bis zur Arbeitskammer 7. Über die Kapillarbohrungen 17 gelangt verdichtetes Gas aus der Verteilerkammer 12 zurück in die Arbeitskammer 7, wo es ein Gaspolster bildet, das den Kolben 8 schwebend ohne Kontakt mit der Lagerbuchse 6 hält und so eine im Wesentlichen reibungsfreie Bewegung des Kolbens 8 ermöglicht.

Fig. 2 zeigt einen Schnitt durch die Stirnwand 3 des Verdichters in Höhe der Verteilerkammer 12. Die von dort ausgehenden Kanäle 14 können in im Prinzip beliebiger, zur Speisung aller Versorgungsbohrungen 15 mit Druckgas erforderlicher Anzahl vorgesehen sein, wie zum Teil durch gestrichelte Umrisse dargestellt.

Fig. 3 zeigt einen radialen Schnitt durch die Lagerbuchse 6 entlang der Ebene III-III der Fig. 1. Eine Mehrzahl von Versorgungsbohrungen 15, hier zwölf Stück, ist gleichmäßig über den Umfang der Lagerbuchse 6 verteilt. Um diese sowie in anderen, zur gezeigten Schnittebene parallelen Ebenen liegende Versorgungsbohrungen 15 zu speisen, sind die Kanäle 14 in entsprechender Zahl an der Innenseite des Mantels 2 verteilt und mit der Verteilerkammer 12 verbunden.

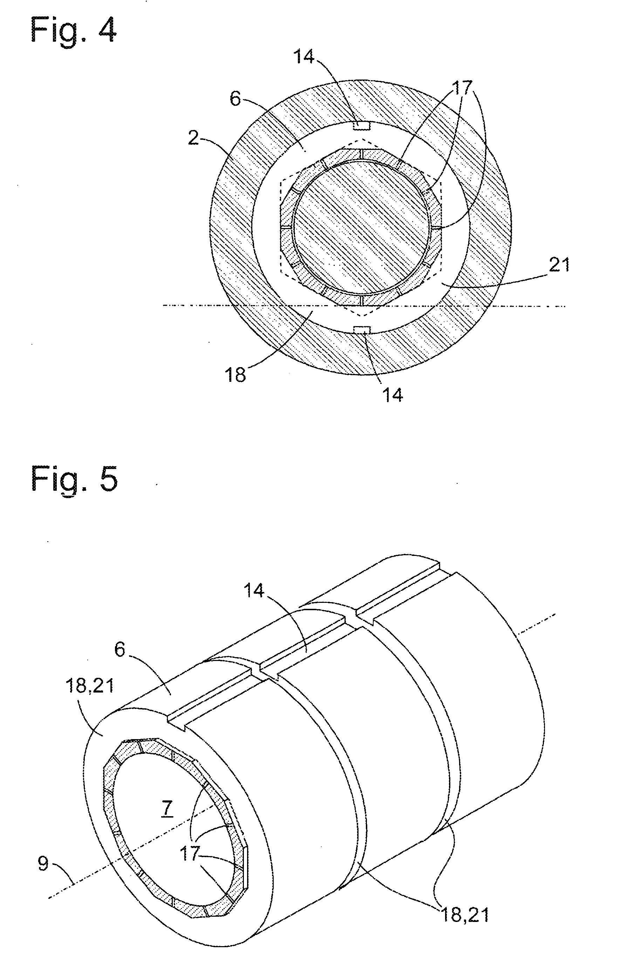

Fig. 4 zeigt einen Schnitt entlang der Ebene III-III gemäß einer zweiten Ausgestaltung der Erfindung. An der Außenfläche der Lagerbuchse 6 sind durch Sägen oder Fräsen eine Mehrzahl von schmalen, kreissegmentförmigen Vertiefungen 18 gebildet, von denen eine durch eine strichpunktierte Begrenzungslinie zur Verdeutlichung hervorgehoben ist. Die miteinander zu einer umlaufenden Nut 21 überlappenden Vertiefungen 18 reduzieren den Querschnitt der Lagerbuchse 6 in der gezeigten Schnittebene auf ein regelmäßiges Vieleck, hier ein Zwölfeck, wobei sich jeweils eine Kapillarbohrung 17 von der Mitte jeder Seite des Vielecks aus durch den Körper der Lagerbuchse 6 zur Arbeitskammer 7 erstreckt. Die \/ieleckform hat zur Folge, dass die Querschnittsfläche der Lagerbuchse 6 in der Schnittebene und damit ihre Steifigkeit größer ist als die einer herkömmlichen Lagerbuchse, bei der Kapillarbohrungen von einer umlaufenden Nut von konstanter Tiefe ausgehen. Der Zuwachs an Querschnittsfläche ist um so größer, je kleiner die Zahl der Ecken des Vielecks ist, wie eine zum Vergleich gestrichelt eingezeichnete Sechseckkontur verdeutlicht. Da die einzelnen Vertiefungen 18 an den Ecken des Vielecks miteinander verschmelzen und so die umlaufende Nut 21 mit variabler Tiefe bilden, genügt eine kleine Zahl von Kanälen 14, um alle Kapillarbohrungen 17 zu speisen. Diese können, wie in Fig. 2 gezeigt, sich entlang der Innenfläche des Mantels 2 erstrecken; in Fig. 4 sind sie in der Lagerbuchse 6 selbst, wie die Vertiefungen 18 durch Fräsen oder Sägen, gebildet. An Stelle der in der Fig. 4 gezeigten zwei Kanäle 14 könnte auch ein einziger genügen.

Fig. 5 zeigt zur Veranschaulichung eine perspektivische Ansicht einer in Höhe einer von den Vertiefungen 18 gebildeten umlaufenden Nut 21 durchgeschnittenen Lagerbuchse 6. Es sind mehrere axial beabstandete umlaufende Nuten 21 und die sie miteinander und mit der Verteilerkammer 12 verbindenden Kanäle 14 zu erkennen.

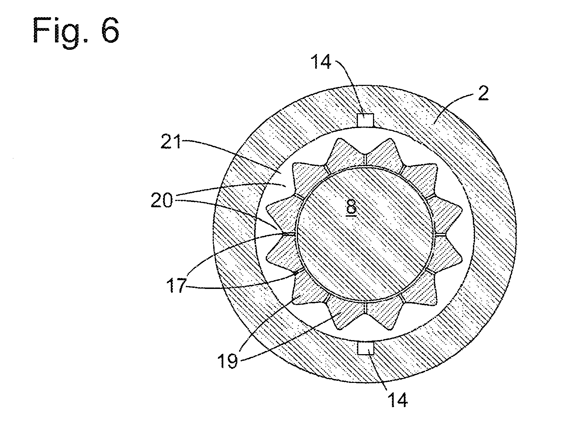

Einer in Fig. 6 gezeigten dritten Ausgestaltung zufolge sind axial beabstandete umlaufenden Nuten 21, von denen eine im Schnitt in der Fig. zu sehen ist, an der Außenfläche der Lagerbuchse 6 durch Drehbearbeitung mit einem in radialer Richtung der Lagerbuchse 6 oszillierenden Drehmeißel gebildet. Indem die Oszillationsfrequenz des Drehmeißels auf das Zwölffache der Drehfrequenz der Lagerbuchse 6 gesetzt ist, wird eine zahnradähnliche Querschnittsform mit zwölf Zähnen 19 und zwölf Zahnzwischenräumen 20 erhalten. Nachdem die Wandstärke der Lagerbuchse 6 durch die Drehbearbeitung an den tiefsten Stellen der Zahnzwischenräume 20 auf das gewünschte Maß von 0,6 mm reduziert ist, werden dort die Kapillarbohrungen 17 eingebracht. Die jeweils dazwischen liegenden Zähne 19 gewährleisten eine große Querschnittsfläche der Lagerbuchse 6 in der Schnittebene und damit ein hohes Maß an Formbeständigkeit. Ein Kanal 14 zur Versorgung der Kapillarbohrungen 17 mit Druckgas kann sich wie in Fig. 2 gezeigt entlang der Innenfläche des Mantels 2 oder als Bohrung durch den Mantel 2 hindurch erstrecken oder wie in Fig. 4 und 5 gezeigt in die Lagerbuchse 6 gesägt oder gefräst sein. Denkbar ist auch, die Außenfläche der Lagerbuchse 6 auf ihrer gesamten Länge mit dem oszillierenden Drehmeißel zu bearbeiten, um so zwischen unbearbeitet bleibenden Streifen der Außenfläche jeweils Längskanäle 14 zu erzeugen, die die umlaufenden Nuten 21 mit der Verteilerkammer verbinden.

## Patentansprüche

1. Gasdrucklager mit einem eine Lagerbuchse aufnehmenden Gehäuse (1), die einen Buchsenkörper (6) aufweist, der eine Längsachse (9) definiert und eine Mehrzahl von an einer Außenfläche des Buchsenkörpers (6) gebildeten Vertiefungen (16, 18, 20) und einer Mehrzahl von sich jeweils vom Boden einer Vertiefung (16, 18, 20) aus durch den Buchsenkörper (6) zu einer Innenfläche desselben erstreckenden Kapillarbohrungen (17) aufweist, **dadurch gekennzeichnet, dass** der Buchsenkörper (6) in jedem quer zu der Längsachse (9) durch eine der Kapillarbohrungen (17) verlaufenden Schnitt lokal eine höhere Wandstärke aufweist als in unmittelbarer Umgebung der Kapillarbohrung (17).

2. Gasdrucklager nach Anspruch 1, **dadurch gekennzeichnet, dass** die Vertiefungen (16) Sackbohrungen (16) sind, deren Durchmesser größer als der der Kapillarbohrungen (17) ist, und dass von einer Bodenfläche jeder Sackbohrung (16) jeweils eine der Kapillarbohrungen (17) ausgeht.

3. Gasdrucklager nach Anspruch 1, **dadurch gekennzeichnet, dass** die Vertiefungen (18) kreissegmentförmige Aussparungen (18) an der zylindrischen Außenfläche der Hülse (6) sind.

4. Gasdrucklager nach Anspruch 3, **dadurch gekennzeichnet, dass** eine Kapillarbohrung (17) in einem Schnitt quer zu der Längsachse (9) jeweils mittig von einer Bodenfläche der Aussparung (18) ausgeht.

5. Gasdrucklager nach Anspruch 3 oder 4, **dadurch gekennzeichnet, dass** jeweils mehrere der Aussparungen (18) zu einer an der Außenfläche des Buchsenkörpers (6) umlaufenden Nut (21) verschmolzen sind.

6. Gasdrucklager nach Anspruch 4, 5 oder 6, **dadurch gekennzeichnet, dass** die Bodenflächen der Aussparungen (18) im Schnitt ein regelmäßiges Vieleck bilden.

7. Gasdrucklager nach Anspruch 1, **dadurch gekennzeichnet, dass** die Vertiefungen (18, 20) Teil wenigstens einer an der Außenfläche des Buchsenkörpers (6) umlaufenden Nut (21) mit in Umlaufrichtung variabler Tiefe sind.

8. Gasdrucklager nach Anspruch 1 oder 7, **dadurch gekennzeichnet, dass** der Buchsenkörper (6) in einem Schnitt quer zu der Längsachse (9) die Form eines Zahnrades mit Zähnen (19) und Zahnzwischenräumen (20) hat, wobei jeweils von einem der Zahnzwischenräume (20) eine der Kapillarbohrungen (17) ausgeht.

9. Gasdrucklager nach Anspruch 8, **dadurch gekennzeichnet, dass** die Zähne (19) und Zahnzwischenräume (20) im Schnitt eine geschwungene Kontur bilden.

10. Gasdrucklager nach einem der Ansprüche 8 oder 9, **dadurch gekennzeichnet, dass** die Zahnradform durch ein spanabhebendes Fertigungsverfahren, insbesondere durch Drehen mit einem oszillierenden Drehmeißel erzeugt ist.

11. Gasdrucklager nach einem der vorhergehenden Ansprüche, **dadurch gekennzeichnet, dass** an einer Innenfläche des Gehäuses (1) wenigstens ein Kanal (14) gebildet ist, über den mehrere der Vertiefungen (16, 18, 20) kommunizieren.

12. Gasdrucklager nach Anspruch 11, **dadurch gekennzeichnet, dass** der Kanal (14) in Richtung der Längsachse (9) ausgedehnt ist und dass die über den Kanal (14) miteinander kommunizierenden Vertiefungen (16, 18, 20) in Richtung der Längsachse (9) beabstandet sind.

13. Linearverdichter, **gekennzeichnet durch** ein Gasdrucklager nach einem der Ansprüche 1 bis 12.

## Claims

1. . Gas pressure bearing with a housing (1), which receives a bearing bush and which has a bush body (6), which defines a longitudinal axis (9) and has a plurality of recesses (16, 18, 20) formed at an outer surface of the bush body (6) and a plurality of capillary bores (17) respectively extending from the base of a recess (16, 18, 20) through the bush body (6) to an inner surface thereof, **characterised in that** the bush body (6) has in each section extending transversely to the longitudinal axis (9) through one of the capillary bores (17) a higher local wall thickness than in the immediate vicinity of the capillary bore (17).

2. . Gas pressure bearing according to claim 1, **characterised in that** the recesses (16) are blind bores (16), the diameter of which is larger than that of the capillary bores (17), and that a respective one of the capillary bores (17) goes out from a base surface of each blind bore (16).

3. . Gas pressure bearing according to claim 1, **characterised in that** the recesses (18) are circularly segmental cut-outs (18) at the cylindrical outer surface of the sleeve (6).

4. . Gas pressure bearing according to claim 3, **characterised in that** a capillary bore (17) in a section transverse to the longitudinal axis (9) respectively goes out centrally from a base surface of the cut-out (18).

5. . Gas pressure bearing according to claim 3 or 4, **characterised in that** in each instance several of the cut-outs (18) are fused to form a groove (21) extending around the outer surface of the bush body (6).

6. . Gas pressure bearing according to claim 4, 5 or 6, **characterised in that** the base surfaces of the cut-outs (18) form a regular polygon in section.

7. . Gas pressure bearing according to claim 1, **characterised in that** the recesses (18, 20) are part of at least one groove (21), which runs around the outer surface of the bush body (6), with a depth variable in the direction of encircling.

8. . Gas pressure bearing according to claim 1 or 7, **characterised in that** the bush body (6) has in a section transverse to the longitudinal axis (9) the shape of a gearwheel with teeth (19) and tooth intermediate spaces (20), wherein in each instance one of the capillary bores (17) goes out from one of the tooth intermediate spaces (20)

9. . Gas pressure bearing according to claim 8, **characterised in that** the teeth (19) and tooth intermediate spaces (20) form an oscillating contour in section.

10. . Gas pressure bearing according to one of claims 8 and 9, **characterised in that** the gearwheel shape is generated by a machining production method, particularly by turning with an oscillatory turning cutter.

11. . Gas pressure bearing according to any one of the preceding claims, **characterised in that** at least one channel (14) by way of which several of the recesses (16, 18, 20) communicate is formed at an inner surface of the housing (1).

12. . Gas pressure bearing according to claim 11, **characterised in that** the channel (14) is extended in the direction of the longitudinal axis (9) and that the recesses (16, 18, 20) communicating with one another by way of the channel (14) are spaced apart in the direction of the longitudinal axis (9).

13. . Linear compressor, **characterised by** a gas pressure bearing according to any one of claims 1 to 12.

## Revendications

1. Palier à gaz comprenant un boîtier (1) logeant un coussinet qui présente un corps de coussinet (6), lequel définit un axe longitudinal (9,) et une pluralité d'approfondissements (16, 18, 20) formés sur une surface extérieure du corps de coussinet (6) et une pluralité de trous capillaires (17) s'étendant respectivement du fond d'un approfondissement (16, 18, 20) à travers le corps de coussinet (6) vers une surface intérieure de celui-ci, **caractérisé en ce que** le corps de coussinet (6), dans chaque coupe s'étendant transversalement à l'axe longitudinal (9) à travers un des trous capillaires (17), présente localement une épaisseur de paroi plus élevée que dans les environs directs du trou capillaire (17).

2. Palier à gaz selon la revendication 1, **caractérisé en ce que** les approfondissements (16) sont des trous borgnes (16) dont le diamètre est supérieur à celui des trous capillaires (17), et **en ce que** respectivement un des trous capillaires (17) part d'une surface de fond de chaque trou borgne (16).

3. Palier à gaz selon la revendication 1, **caractérisé en ce que** les approfondissements (18) sont des évidements (18) en forme de segments de cercle disposés sur la surface extérieure cylindrique du coussinet (6).

4. Palier à gaz selon la revendication 3, **caractérisé en ce qu'**un trou capillaire (17), dans une coupe transversale à l'axe longitudinal (9), part respectivement du centre d'une surface de fond de l'évidement (18).

5. Palier à gaz selon la revendication 3 ou 4, **caractérisé en ce que** respectivement plusieurs des évidements (18) fusionnent en une rainure (21) périphérique sur la surface extérieure du corps de coussinet (6).

6. Palier à gaz selon les revendications 4, 5 ou 6, **caractérisé en ce que** les surfaces de fond des évidements (18) forment en coupe un polygone régulier.

7. Palier à gaz selon la revendication 1, **caractérisé en ce que** les approfondissements (18, 20) sont une partie d'au moins une rainure (21), périphérique sur la surface extérieure du corps de coussinet (6), à profondeur variable dans le sens de rotation.

8. Palier à gaz selon la revendication 1 ou 7, **caractérisé en ce que** le corps de coussinet (6), dans une coupe transversale à l'axe longitudinal (9), a la forme d'une roue dentée comprenant des dents (19) et des espaces intermédiaires (20) entre les dents, un des trous capillaires (17) partant respectivement de l'un des espaces intermédiaires (20) entre les dents.

9. Palier à gaz selon la revendication 8, **caractérisé en ce que** les dents (19) et les espaces intermédiaires (20) entre les dents forment en coupe un contour courbe.

10. Palier à gaz selon l'une quelconque des revendications 8 ou 9, **caractérisé en ce que** la forme de la roue dentée est réalisée au moyen d'un procédé d'usinage par enlèvement de copeaux, notamment par tournage à l'aide d'un outil de tournage oscillant.

11. Palier à gaz selon l'une quelconque des revendications précédentes, **caractérisé en ce que** sur une surface intérieure du boîtier (1) est formé au moins un canal (14), par l'intermédiaire duquel plusieurs des approfondissements (16, 18, 20) communiquent.

12. Palier à gaz selon la revendication 11, **caractérisé en ce que** le canal (14) est étendu en direction de l'axe longitudinal (9) et **en ce que** les approfondissements (16, 18, 20) communiquant par l'intermédiaire du canal (14) sont espacés en direction de l'axe longitudinal (9).

13. Compresseur linéaire **caractérisé par** un palier à gaz selon l'une quelconque des revendications 1 à 12.
